# EUROPÄISCHE PATENTSCHRIFT

(11) **EP 0 517 279 B1**
(45) Veröffentlichungstag und Bekanntmachung des Hinweises auf die Patenterteilung: **19.04.1995**
(21) Anmeldenummer: 92109684.8
(22) Anmeldetag: 09.06.1992
(51) Int. Cl.: F16B 37/08

(54) **Befestigungshülse zum Aufstecken auf einen Gewindebolzen**
Fastening sleeve for mounting on a threaded bolt
Manchon de fixation à monter sur un boulon fileté

(30) Priorität: 06.06.1991 DE 9106979 U
(43) Veröffentlichungstag der Anmeldung: 09.12.1992
(73) Patentinhaber: Paul Hellermann GmbH, 25421 Pinneberg (DE)
(72) Erfinder: Matschiner, Bernd Dr.-Ing., W-2081 Kummerfeld (DE); Rathjen, Michael, W-2082 Uetersen (DE)
(74) Vertreter: Glawe, Delfs, Moll & Partner

(56) Entgegenhaltungen:
- FR-A- 2 607 201
- FR-A- 2 608 723
- US-A- 4 547 108

## Beschreibung

Die Erfindung bezieht sich auf eine Befestigungshülse zum Aufstecken auf einen Gewindebolzen gemäß Oberbegriff des Anspruchs 1.

Eine solche Hülse ist bekannt aus FR-A-2608723.

Derartige Befestigungshülsen werden verwendet, um beliebige Teile auf einfache Weise an einer tragenden Struktur zu befestigen. Beispielsweise werden Bindeschellen oder Halteklammern aus Kunststoff einstückig mit einer solchen Hülse verbunden, um Kabel, Schläuche und dergleichen in Fahrzeugkarosserien zu befestigen. Ihre Haltesicherheit hängt von der Belastbarkeit der Haltezungen ab. Dies gilt insbesondere dann, wenn bei einer Mehrzahl von Haltezungen, die Eingriffswahrscheinlichkeit dafür spricht, daß sich jeweils nur eine oder wenige Haltezungen in Eingriffsstellung befinden.

Die Haltesicherheit hängt auch davon ab, daß die Haltezungen mit hinreichender Rückstellkraft zwischen die Gewindegänge des Bolzens gezogen werden, nachdem sie zuvor während des

Aufschiebens der Hülse beim Vorbeigehen an einem Gewindegang nach außen gebogen wurden. Die Rückstellkraft kann man durch dicke Ausführung der Zungen vergrößern, was aber häufig unerwünscht ist, weil man u.a. ihren radialen Platzbedarf gering halten möchte.

Die Erfindung hat daher das Ziel, die Rückstellkraft der Haltezungen zu vergrößern. Sie erreicht dies durch die kennzeichnenden Merkmale des Anspruchs 1.

Dessen Wirkung beruht zum einen darauf, daß, wenn die Haltezungen oder einige Haltezungen des Kranzes im Vorbeigehen an einem Gewindegang nach außen ausweichen müssen, das Zugorgan gedehnt wird und dadurch zur Erzeugung einer Rückstellkraft beiträgt. Zum anderen wird eine Rückstellkraft dann erzeugt, wenn die Haltezungen so im Kranz angeordnet sind, daß dann, wenn eine Gruppe von Haltezungen nach außen verformt wird, eine andere Gruppe desselben Kranzes die Freiheit hat, sich zwischen zwei Gewindegängen nach innen zu bewegen. Dadurch wird nicht nur die erforderliche Maximalverformung des Zugorgans verringert, weil das Zugorgan nicht über den gesamten Umfang der Dehnung ausgesetzt wird, sondern es wird auch die Bewegung der nach außen gedrängten Haltezungen gegensinnig übertragen auf diejenigen Haltezungen, die die Freiheit einer nach innen gerichteten Bewegung besitzen, so daß deren Rückstellkraft zusätzlich zu der elastischen Verformung des Zugglieds vergrößert wird. Es ist in diesem Zusammenhang nicht erforderlich, daß das Zugorgan oder der Kranz der Haltezungen genau in Umfangsrichtung verläuft. Jedoch kommt diese spezielle Wirkung nur zustande, wenn nicht gleichzeitig sämtliche Haltezungen des Kranzes in Eingriffsstellung sind bzw. an einem Gewindegang vorbeigehend maximal nach außen gedrückt werden.

Bei einer besonderen Ausführungsform der Erfindung ist das Zugglied als eine in Abzugsrichtung und nach innen geneigte Membran ausgebildet.

Ferner hat die Erfindung erkannt, daß die Belastbarkeit der Haltezungen vergrößert wird, wenn die Rastkante gemäß dem Steigungswinkel der Gewindegänge geneigt verläuft. Dieses Merkmal führt zu einer gleichmäßigeren Anlage der Rastkanten über deren gesamter Länge an den Gewindegängen und dadurch zu einer gleichmäßigeren Kraftübertragung auf die Haltezungen. Die Haltesicherheit der Vorrichtung wird vergrößert bzw. eine bestimmte Belastbarkeit wird mit kleineren Vorrichtungen erreicht. Auch können die Kaltezungen bei gleicher Belastbarkeit im Querschnitt schwächer ausgeführt werden, so daß sie beim Aufstecken der Hülse nachgiebiger sind und somit ein günstigeres, kleineres Verhältnis von der Montagekraft, die zum Aufschieben der Hülse auf den Bolzen erforderlich ist, zur Abzugskraft erreicht wird.

Es ist nicht erforderlich, daß die gesamte Haltezunge schief gestellt wird. Vielmehr können im Hinblick auf eine einfachere Herstellung beide Seitenflächen oder eine derselben nach wie vor in Längsrichtung der Hülse verlaufen. Jedoch kann es vorteilhaft sein, auch die Mittelachse der Haltezunge gegenüber der Längsrichtung geneigt verlaufen zu lassen. Entsprechendes gilt für die Befestigungsfläche, in welcher die Haltezunge an der Hülsenwand befestigt ist.

Die Erfindung wird im folgenden näher unter Bezugnahme auf die Zeichnung erläutert, die vorteilhafte Ausführungsbeispiele veranschaulicht. Es zeigen:
- Fig. 1 und 2: eine Schnittansicht und eine Draufsicht einer ersten Ausführungsform und
- Fig. 3 und 4: eine Schnittansicht und eine Draufsicht, die bevorzugte Merkmale der Neigung der Haltezungen zeigen, während
- Fig. 5: den Kranz der Haltezungen der ersten Ausführungsform ohne die umgebende Hülse in perspektivischer Ansicht veranschaulicht.

Die Befestigungshülse besteht aus der zylindrischen Hülsenwand 1, sechs gleichmäßig über den Umfang verteilten, in Längsrichtung verlaufenden Führungsrippen 2 und einer Reihe (in den dargestellten Beispielen sechs) in Umfangsrichtung als Kranz aufgereihten Kaltezungen 3, die sich sämtlich in gleicher Höhe befinden und radialsymmetrisch identisch ausgebildet sind. Während die Rippen 2 von der Hülsenwand 1 bis zu derjenigen gedachten Zylinderfläche vorragen, die den Außendurchmesser des zugehörigen Bolzens hat, ragen die Spitzen der Haltezungen 3 mit ihren Rastkanten 4 über diese Zylinderfläche hinaus nach innen vor, um in die Gewindegänge des Bolzens einzugreifen. Wenn die Hülse entgegen der Abzugsrichtung 5 auf einen Bolzen aufgeschoben wird, weichen die Haltezungen 3 beim Vorbeigehen an jedem Gewindegang nach außen unter elastischer Verformung aus, um danach wieder nach innen in den Zwischenraum zwischen zwei Gewindegängen einzurasten. Wenn die Befestigungshülse gänzlich auf den Bolzen aufgeschoben ist, greifen einige der Befestigungszungen in den Zwischenraum zwischen zwei Gewindegängen ein, wobei eine der sechs Rastkanten 4 sich in größter Nähe des benachbarten Gewindegangs befindet und spätestens dann in Anlage an diesen gelangt, wenn versucht wird, die Befestigungshülse in Abzugsrichtung 5 von dem Bolzen zu entfernen. Es muß dann die Haltekraft von der Haltezunge 3 zwischen der Eingriffskante 4 und der Hülsenwand 1 übertragen werden.

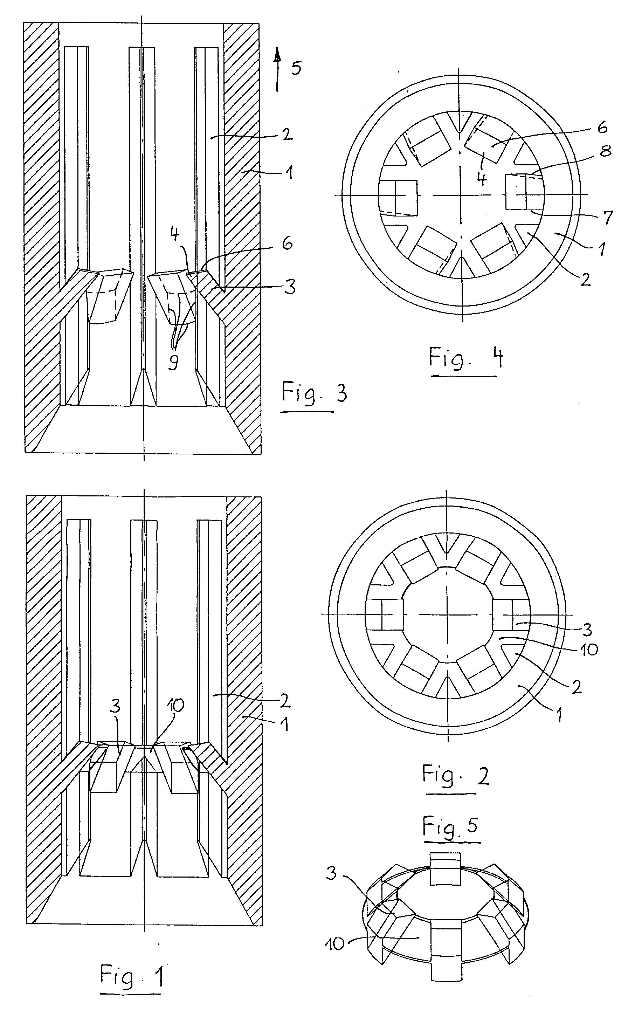

Wie man am besten aus der perspektivischen Darstellung in Fig. 5 ersieht, sind die benachbarten Haltezungen 3 miteinander durch eine schräg nach oben und innen, im Gesamtverlauf etwa konische Membran 10 miteinander verbunden, deren Umfangslänge sich vergrößern muß, wenn die Haltezungen beim Aufschieben auf einen Bolzen und beim Vorbeigehen an einem Gewindegang nach außen verformt werden. Dabei ergeben sich elastische Rückstellkräfte, die den Eingriff der Haltezungen zwischen die Gewindegänge zuverlässiger machen. Ferner leuchtet bei Betrachtung von Fig. 1 ein, daß infolge der Verbindung sämtlicher Haltezungen miteinander die links im Querschnitt erscheinende Haltezunge nach innen gezogen wird, wenn die rechts im Querschnitt erscheinende Haltezunge nach außen verformt wird. Unabhängig von den elastischen Rückstellkräften wird dann also für die linke Haltezunge eine zusätzliche Kraft erzeugt, die sie in Eingriffsstellung zieht. Diese Wirkung ist umso besser, je geringeren Widerstand die dazwischen befindlichen Haltezungen einer seitlichen Verbiegung entgegensetzen. Es kann deshalb zweckmäßig sein, sie in Umfangsrichtung nachgiebig zu gestalten.

Gemäß der in Fig. 3 und 4 dargestellten Ausführungsform, die der Deutlichkeit halber ohne die Membran 10 gezeigt ist, können die Rastkanten 4 der Befestigungshülse gegenüber der Umfangsrichtung parallel zum Steigungswinkel der Gewindegänge des Bolzens, für den diese Befestigungshülse bestimmt ist, geneigt sein, so daß die Rastkante 4 (möglicherweise auch die gesamte Stirnfläche 6 der Haltezunge) sich an den zugehörigen Gewindegang anzulegen vermag. Die Haltekräfte verteilen sich dann infolge der Linienbelastung gleichmäßiger über den Zungenquerschnitt als bei Haltezungen, bei denen jeweils nur eine Ecke der Rastkante ursprünglich mit dem zugehörigen Gewindegang in Kontakt kommt, während der übrige Teil der Rastkante erst nach entsprechender Verformung an der Kraftübertragung teilnimmt.

Man erkennt aus Fig. 4, die die Befestigungshülse der Fig. 3 von oben zeigt, daß eine Haltezungenflanke 8 ein wenig schräg entsprechend der Schrägung der Rastkante 4 verläuft. Die andere Flanke 7 verläuft parallel zur Längsrichtung, damit sie ohne Hinterschnitt entformt werden kann. Demgemäß verläuft auch die Mittelachse der Haltezunge (als Winkelhalbierende der beiden Flanken) ein wenig im Sinne der Rastkantenneigung 4 geneigt, was gleichfalls die gleichmäßige Kraftübertragung begünstigt. Selbstverständlich könnte auch die Flanke 7 entsprechend geneigt sein.

Die Haltezungen sind im Bereich der Fläche, die in Fig. 3 durch die Grenzlinien 9 umschlossen wird, einstückig mit der Hülsenwand 1 verbunden. Gewünschtenfalls kann auch diese Befestigungsfläche bzw. deren Grenzlinien entsprechend geneigt verlaufen.

## Patentansprüche

1. Befestigungshülse zum Aufstecken auf einen Gewindebolzen, die in Abzugsrichtung (5) und nach innen gerichtete, als Kranz angeordnete, elastisch nachgiebige Haltezungen (3) enthält, die jeweils wenigstens eine zum Eingriff in die Gewindegänge des Gewindebolzens bestimmte Rastkante (4) bilden, dadurch gekennzeichnet, daß die Haltezungen (3) einstückig aus der Hülsenwand hervorragen und durch ein dünnes Zugorgan in Umfangsrichtung direkt miteinander verbunden sind.

2. Befestigungshülse nach Anspruch 1, dadurch gekennzeichnet, daß das Zugorgan von einer in Abzugsrichtung (5) und nach innen geneigten Membran (10) gebildet ist.

3. Befestigungshülse nach Anspruch 1 oder 2, dadurch gekennzeichnet, daß die Rastkante (4) der Haltezungen gemäß dem Steigungswinkel der Gewindegänge geneigt zur Umfangsrichtung verläuft.

4. Befestigungshülse nach Anspruch 3, dadurch gekennzeichnet, daß die Mittelachse der Haltezungen (3) gegenüber der Längsrichtung entsprechend geneigt verläuft.

5. Befestigungshülse nach Anspruch 3 oder 4, dadurch gekennzeichnet, daß die Verbindung (9) der Haltezunge (3) mit der Wand (1) der Hülse im Sinne der Neigung der Rastkante (4) geneigt verläuft.

## Claims

1. A fastening sleeve to be fitted on a threaded bolt, which includes inwardly directed retaining tongues (3) which are elastically flexible in a removal direction (5) and are arranged in a ring, and which respectively form at least one detent edge (4) intended to engage into the threads of the threaded bolt, characterised in that the retaining tongues (3) protrude in one piece from the sleeve wall and are directly connected with one another in peripheral direction by a thin tension member.

2. A fastening sleeve according to Claim 1, characterised in that the tension member is formed by a diaphragm (10) which is inwardly inclined in the removal direction (5).

3. A fastening sleeve according to Claim 1 or 2, characterised in that the detent edge (4) of the retaining tongues extends inclined to the peripheral direction according to the pitch angle of the threads.

4. A fastening sleeve according to Claim 3, characterised in that the centre axis of the retaining tongues (3) extends correspondingly inclined in relation to the longitudinal direction.

5. A fastening sleeve according to Claim 3 or 4, characterised in that the connection (9) of the retaining tongue (3) with the wall (1) of the sleeve extends inclined in accordance with the inclination of the detent edge (4).

## Revendications

1. Douille de fixation destinée à être placée sur un boulon fileté, comportant des languettes de retenue élastiquement flexibles (3) qui sont dirigées vers l'intérieur et orientées dans le sens de l'extraction (5), sont disposées en couronne et forment chacune au moins une arête d'encliquetage (4) destinée à s'engager dans les filets du boulon fileté, caractérisée en ce que les languettes de retenue (3) font saillie, d'un seul tenant, sur la paroi de la douille et sont directement reliées les unes aux autres, dans la direction circonférentielle, par un organe tendeur mince.

2. Douille de fixation selon la revendication 1, caractérisée en ce que l'organe tendeur est constitué par une membrane (10) inclinée vers l'intérieur et dans le sens de l'extraction (5).

3. Douille de fixation selon la revendication 1 ou 2, caractérisée en ce que l'arête d'encliquetage (4) des languettes de retenue s'étend, par rapport à la direction circonférentielle, avec une inclinaison qui correspond à l'angle d'hélice des filets du boulon.

4. Douille de fixation selon la revendication 3, caractérisée en ce que l'axe médian des languettes de retenue (3) s'étend avec une inclinaison correspondante par rapport à la direction longitudinale.

5. Douille de fixation selon la revendication 3 ou 4, caractérisée en ce que la jonction (9) des languettes de retenue (3) à la paroi (1) de la douille est inclinée dans le sens de l'inclinaison des arêtes d'encliquetage (4).
